**Europäisches Patentamt**

**European Patent Office**

**Office européen des brevets**

(11) Veröffentlichungsnummer: **0 422 392 A2**

# (12) EUROPÄISCHE PATENTANMELDUNG

(21) Anmeldenummer: **90117360.9**

(22) Anmeldetag: **10.09.90**

(51) Int. Cl.5: **B32B 7/12**, B32B 15/06

(30) Priorität: **12.10.89 DE 3934090**

(43) Veröffentlichungstag der Anmeldung:
**17.04.91 Patentblatt 91/16**

(84) Benannte Vertragsstaaten:
**AT BE CH DE ES FR GB IT LI NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Jadamus, Hans**
**Hervester Strasse 8**
**W-4380 Marl(DE)**
Erfinder: **Richter, Klaus-Peter**
**Erlbrüggestrasse 38**
**W-4380 Marl(DE)**
Erfinder: **Scholten, Heinz**
**Rehwinkel 3**
**W-4358 Haltern(DE)**

(54) **Verbundteile aus Metallen und Gummi sowie Verfahren zu ihrer Herstellung.**

(57)
2.1. Der Erfindung lag das Ziel zugrunde, die bisherige umständlige Herstellung derartiger Bauteile wesentlich zu vereinfachen und umweltfreundlicher zu gestalten.
2.2. Die Aufgabe wurde dadurch gelöst, daß
I. das Metallteil mit einem Polyamid, das als Haftvermittler dient, vorzugsweise durch ein Pulverbeschichtungsverfahren beschichtet wird;
II. anschließend eine Kautschukmischung, die einen carboxylierten Kautschuk enthält, in engem Kontakt mit dem polyamidbeschichteten Metall vulkanisiert wird.
2.3. Die Verbundteile werden für technische Zwecke, z. B. als Walzen, Dichtungen oder Schwingungsdämpfer eingesetzt.

EP 0 422 392 A2

## VERBUNDTEILE AUS METALLEN UND GUMMI SOWIE VERFAHREN ZU IHRER HERSTELLUNG

Die Erfindung betrifft Verbundteile, die aus mindestens je einer Metall- und einer Gummikomponente bestehen und die eine haftvermittelnde Polyamidschicht enthalten sowie ein Verfahren zur Herstellung solcher Teile.

Bekanntlich kann ein einziger Werkstoff nicht immer alle Eigenschaften beitragen, die von einem Gegenstand verlangt werden. Nicht vereinbar sind z. B. hohe Festigkeit, Steifigkeit oder Härte einerseits und gute Schwingungsdämpfung, Schmiegsamkeit oder Rutschfestigkeit andererseits. Soll ein Körper diese Eigenschaften vereinen, dann verwendet man Verbunde aus mehreren Werkstoffen.

Es bietet sich an, in diesem Fall Metall und Gummi zu verwenden. Bauteile herzustellen, deren Komponenten Metall und Gummi fest miteinander verbunden sind, geht man nach dem heutigen Stand der Technik wie folgt vor:

1. Die metallische Komponente wird z. B. durch Gießen, Pressen, Spanen oder Ziehen geformt.

2. Die Oberfläche der metallischen Komponente wird z. B. durch Entfetten, Sandstrahlen, Vermessingen oder Phosphatieren behandelt.

3. Ein "Primer" wird aus einer Lösung z. B. in Aromaten oder Chlorkohlenwasserstoffen aufgetragen.

4. Das Lösemittel wird durch Verdampfen entfernt.

5. Ein "Haftvermittler" wird aus einer Lösung z. B. in Aromaten oder Chlorkohlenwasserstoffen aufgetragen.

6. Das Lösemittel wird durch Verdampfen entfernt.

7. Der Kautschuk wird auf die so vorbehandelte Metalloberfläche aufgebracht und ausvulkanisiert.

Die zwischen Metall und Kautschuk bzw. Gummi haftvermittelnden Stoffe werden z. B. in W. Kleemann, Mischungen für die Elastverarbeitung, Leipzig 1982 sowie im Bayer-Taschenbuch für die Gummi-Industrie, 1963, sowie besonders in Firmenschriften der Henkel KGaA unter dem Handelsnamen "Chemosil" beschrieben.

Die bekannten Verfahren sind aus verschiedenen Gründen verbesserungswürdig:

1. Sie sind umständlich, wie aus der Aufzählung der vielen Verarbeitungsschritte hervorgeht.

2. Sie sind hinsichtlich der Umweltbelastung und der Gesundheitsgefährdung am Arbeitsplatz nicht unbedenklich: die Lösemittel sind nicht harmlos und müssen entsorgt werden.

3. Die Lagerfähigkeit der behandelten Metallkomponenten ist begrenzt.

4. Der Prozeß ist nicht automatisierbar.

Es wurde nun gefunden, daß man auf die konventionellen Haftvemittler und Primer mit Vorteil verzichten kann, wenn man die Metalloberfläche in an sich bekannter Weise mit Polyamiden beschichtet, bevor man sie mit bestimmten Kautschukzusammensetzungen in Kontakt bringt.

Das Polyamid wird entweder nach dem Verfahren der elektrostatischen Pulverbeschichtung oder nach dem Verfahren des Wirbelsinterns aufgebracht. Es ist auch möglich, das Polyamid in Art eines Lackes oder durch Extrusionsbeschichtung aufzutragen, doch sind diese Verfahren weniger vorteilhaft. Die geeigneten Pulverbeschichtungsverfahren werden z. B. von R. Feldmann in der Firmenschrift Nr. 5215 der Hüls AG, D-4370 Marl, vom November 1987 beschrieben. Beschich tungsverfahren dienten bisher dem Schutz der Metalloberfläche gegen Korrosion; die Verwendung als Haftvermittler für Kautschuke, wie hier beschrieben, ist neu.

Die Verwendung von Polyamiden als Haftvermittler zwischen Metallen und Kautschuk bzw. Gummi bietet eine Reihe von Vorteilen gegenüber den konventionellen Verfahren:

1. Die ökologischen und hygienischen Probleme entfallen, da keine Lösemittel verwendet werden.

2. Die mit dem haftvermittelnden Polyamid behandelten Metallteile sind praktisch unbegrenzt lagerfähig.

3. Der Prozeß ist automatisierbar.

Für das erfindungsgemäße Verfahren können die untenstehenden Kautschuke eingesetzt werden. Diese Kautschuke müssen peroxidisch oder durch andere radikalisch wirkende Additive vernetzt werden. Vernetzer auf Basis von Schwefel oder Schwefelspendern allein eignen sich für das Verfahren nicht.

Als metallische Komponente dienen vorzugsweise Werkstücke aus Stahl, es können aber auch Eisen oder Nichteisenmetalle wie Aluminium oder Messing eingesetzt werden. Die Oberflächen können z. B. durch Entfetten, Sandstrahlen oder Phosphatieren vorbehandelt werden. Ein Primern, wie es häufig bei Polyamidpulverbeschichtungen als notwendig erachtet wird, ist hier überflüssig.

Als Polyamid (PA) wird vorzugsweise PA 1012, PA 11, PA 12 und PA 1212 eingesetzt. Besonders bevorzugt ist PA 12 mit einer relativen Viskosität in m-Kresol (bestimmt nach den in DIN 53 727 beschriebenen Bedingungen) von 1.4 bis 2.0, vorzugsweise von 1.5 bis 1.7. Das Polyamid wird als Pulver eingesetzt. Der Korndurchmesser kann bis zu 200 μm betragen. Das Polyamid kann ggf. Additive wie z. B.

Katalysatoren, Stabilisatoren oder Pigmente enthalten. Verfahren zur Herstellung geeigneter Polyamide sind bekannt (R. Vieweg/A. Müller, Kunststoffhandbuch, Bd. 6 - Polyamid, C. Hanser Verlag München 1966, S. 187; D. E. Floyd, Polyamide Resins, 2. Auflage, Chapman Hall New York/London 1966, S. 55).

Die Herstellung von Polyamidpulvern für Beschichtungen ist z. B. in den deutschen Offenlegungsschriften DE-OSS 35 10 687, 35 10 688, 35 10 689, 35 10 690 und 35 10 691 beschrieben (entspricht den europäischen Offenlegungsschriften EP-OSS 0 202 393, 0 199 000, 0 200 853, 0 200 852 und 0 202 389).

Die verwendeten Kautschukzusammensetzungen enthalten:
- 100 Gewichtsteile eines Carboxylgruppen bzw. Anhydridgruppen enthaltenden Kautschuks
- 10 bis 300 Gewichtsteile Zuschlagstoffe
- 1 bis 10 Gewichtsteile peroxidischer Vulkanisationsmittel
- 0,5 bis 4 Gewichtsteile Vulkanisationsaktivatoren und
- 0 bis 150 Gewichtsteile Weichmacher

Der verwendete Kautschuk kann auch eine Mischung verschiedener geeigneter Typen sein. Bevorzugt werden EP(D)M- und NBR-Kautschuke eingesetzt.

Der EPM-Kautschuk wird in bekannter Weise durch Polymerisation eines Gemisches aus 25 bis 75 % Ethylen und 75 bis 25 % Propylen in Gegenwart eines Ziegler-Natta-Katalysators hergestellt.

Der EPDM-Kautschuk wird in analoger Weise durch Polymerisation eines Gemisches aus
mehr als 25 % Ethylen,
mehr als 25 % Propylen und
1 bis 10 %, insbesondere 1 bis 3 %, eines Diens
hergestellt. Dieses Dien sollte nicht konjugiert sein. Man bevor zugt Bicyclo(2.2.1)heptadien, Hexadien-1.4, Dicyclopentadien und insbesondere 5-Ethylidennorbornen.

Die Carboxylierung der EP(D)M-Kautschuke erfolgt z. B. in bekannter Weise durch Eincompoundierung von ungesättigten Sauren bzw. Säurederivaten, wie Maleinsäure oder Maleinsäureanhydrid (MSA), gegebenenfalls in Anwesenheit eines Radikalstarters. Geeignete Herstellmethoden sind z. B. in der US-PS 4 010 223 angegeben.

Derartige carboxylierte EPM-Kautschuke werden z. B. von der Fa. EXXON unter der Bezeichnung EXXELOR[R] VA 1803 hergestellt. Als geeigneter EPDM-Kautschuk erwies sich z. B. maleinsäureanhydridmodifiziertes BUNA[R] AP (Produktbezeichnung: "VESTAMID X 4496") von den Bunawerken Hüls GmbH, D-4370 Marl.

Die Nitril-Kautschuke (NBR) werden bekannterweise durch Copolymerisation von 50 bis 80 Gewichtsprozent Butadien und entsprechend 50 bis 20 Gewichtsprozent Acrylnitril hergestellt. Eine besondere Modifikation bilden die Carboxylgruppen enthaltenden Nitrilkautschuke. Es handelt sich hier um Mischpolymerisate aus Butadien, Acrylnitril und Acrylsäure, Methacryl- oder Sorbinsäure.

Die Vulkanisate solcher Mischungen zeichnen sich durch eine hohe Zugfestigkeit, gute Elastizität und sehr guten Abriebwiderstand aus. Die für Nitrilkautschuk typische Öl- und Lösemittelbeständigkeit bleibt unverändert.

Geeignete carboxylierte NBR-Kautschuke werden z. B. von GOODYEAR TIRE & RUBBER Company, Akron, Ohio, USA, unter der Bezeichnung CHEMIGUM[R] NX 775 oder von BF GOODRICH, NV, Arnheim, Niederlande, unter dem Handelsnamen HYCAR[R] 1472 hergestellt.

Als Zuschlagstoffe eignen sich alle für EP(D)M- und NBR-Kautschuke üblichen Füllstoffe wie z. B. Ruß, Kieselsäure, Silikate und Calcium-Carbonate sowie Zinkoxid und Stearinsäure.

Geeignete Weichmacher sind insbesondere mineralische Öle oder synthetische Weichmacher wie Ester und Ether. Hierbei werden im Falle des EP(D)M-Kautschuks vorzugsweise mineralische Öle, insbesondere naphthenische Öle eingesetzt. Die Weichmachermenge kann bis zu 150 Gewichtsteilen, bezogen auf 100 Gewichtsteile Kautschuk, betragen; vorzugsweise bis zu 50 Gewichtsteilen.

Geeignete peroxidische Vulkanisationsmittel sind die dem Fachmann bekannten Peroxide wie z. B. 2,5-Dimethyl-2,5-bis(tert.-butylperoxy)hexan, Dicumylperoxid, 4,4-Di-tert.-butylperoxy-n-butylvalerat, 1,1-Di-tert.butylperoxy-3.3.5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Ethylenglykoldimethacrylat (EDMA) und Trimethylolpropantrimethacrylat (TRIM). Bevorzugt werden TAC und/oder EDMA eingesetzt.

Die Herstellung der Verbundteile geschieht durch Vulkanisation der genannten Kautschuke in engem Kontakt, vorzugsweise unter Druck, mit den polyamidbeschichteten Metallen. Die Vulkanisationsbedingungen sind an sich identisch mit den Bedingungen, die bei Verwendung konventioneller Haftvermittler angewendet werden. Vorzugsweise wird die Vulkanisation bei Temperaturen zwischen 140 und 200 °C in 2 bis 30 Minuten, insbesondere bei Temperaturen zwischen 150 und 180 °C in 5 bis 10 Minuten durchgeführt.

Typische Verbundteile aus Metallen und Gummi sind z. B. gummibeschichtete Walzen, Dichtungen, Flansche, Puffer, Federelemente, Schwingungsdämpfer, metallverstärkte Gummiprofile, Kupplungs- und Bremsscheiben. Ein besonderer Vorteil solcher Bauteile ist ihre Beständigkeit gegenüber korrosiven Medien, besonders korrosiven Salzen.

Zur Erläuterung der Erfindung dienen die nachstehenden Beispiele. Dort werden folgende Substanzen eingesetzt:

EXXELOR[R] VA 1803 ist ein maleinsäureanhydrid-modifizierter EPM-Kautschuk der Fa. Exxon Chemicals, Wilmington, Delaware, USA. Die Eigenschaften des Produktes sind der Technischen Information EXXELOR VA" vom 01.03.1988 zu entnehmen.

ZnO ist unter der Bezeichnung Zinkweiß Rotsiegel der Fa. Grillo-Werke AG, D-3380 Goslar zu beziehen.

VULKASIL[R] C ist eine hochaktive Kieselsäure, erhältlich bei der Bayer AG, D-5090 Leverkusen.

CIRCOSOL[R] 4240 ist ein vorwiegend naphthenisches Mineralöl der Fa. Sun Oil, Antwerpen (Belgien).

VULKANOX[R] HS ist ein Alterungsschutzmittel der Bayer AG, D-5090 Leverkusen. Es handelt sich um 2,2,4-Trimethyl-1,2-dihydrochinolin.

PERKADOX[R] 14/40 und PERKADOX[R] BC 40 sind Peroxide der Fa. Akzo-Chemie, 3800 AZ-Amersfoort, Niederlande.

TAC (Triallylcyanurat) und EDMA (Ethylenglykoldimethacrylat) sind Produkte der Fa. Degussa, D-6450 Hanau.

CHEMIGUM[R] NX 775 ist ein Carboxylgruppen enthaltender NBR-Kautschuk der Fa. Goodyear Tire and Rubber, Akron, Ohio, USA. Die Eigenschaften des Produkts sind in der Produktinformation "CHEMIGUM[R] NX 775", November 1987, aufgeführt.

Beispiel 1 (mit einem carboxylierten EPM-Kautschuk)

Ein 1 mm dickes Stahlblech erhitzt man in einem Wärmeofen während 10 Minuten auf 400 °C und taucht es während 10 Sekunden in ein Wirbelbett, das mit käuflichem Beschichtungspulver der Marke VESTOSINT[R] 1101 weiß gefüllt ist. Das beschichtete Stahlblech läßt man erkalten. Man legt das polyamidbeschichtete Stahlblech in einen 4 mm dicken Distanzrahmen, bedeckt ein Drittel des Blechs fit einer Teflonfolie, um an dieser Stelle eine Haftung zu verhindern, beschichtet Blech und Trennfolie mit einem Fell bestehend aus

| EXXELOR[R] VA 1803 | 100 Teile |
|---|---|
| ZnO | 5 Teile |
| VULKASIL[R] C | 60 Teile |
| CIRCOSOL[R] 4240 | 40 Teile |
| VULKANOX[R] HS | 2 Teile |
| PERKADOX[R] 14/40 | 7,5 Teile |
| TAC | 3 Teile |

und preßt die Komposition 20 Minuten bei 170 °C und 200 bar. Metall und Gummi sind nach dieser Behandlung nur durch kohäsiven Bruch im Gummi voneinander zu trennen.

Beispiel 2 (mit einem carboxylierten NBR-Kautschuk)

Man verfährt wie in Beispiel 1, verwendet aber eine andere Kautschuk-Mischung:

| CHEMIGUM$^R$ NX 775 | 100 Teile |
|---|---|
| Stearinsäure | 1 Teile |
| VULKASIL$^R$ C | 40 Teile |
| PERKADOX$^R$ BC 40 | 3 Teile |
| Aktivator EDMA | 0,5 Teile |

Auch in diesem Verbundkörper sind Gummi und Metall nur durch kohäsiven Bruch im Gummi voneinander zu trennen.


**Ansprüche**

1. Verbundteile, bestehend aus folgenden Komponenten:
   I. einem Metall;
   II. einer haftvermittelnden Polyamidschicht und
   III. einem Gummi, der durch Vulkanisation einer Kautschukmischung aus
   - 100 Gewichtsteilen eines Carboxylgruppen bzw. Anhydridgruppen enthaltenden Kautschuks,
   - 10 bis 300 Gewichtsteilen Zuschlagstoffen,
   - 1 bis 10 Gewichtsteilen peroxidischer Vulkanisationsmittel,
   - 0,5 bis 4 Gewichtsteilen Vulkanisationsaktivatoren sowie
   - 0 bis 150 Gewichtsteile Weichmacher entstanden ist.
2. Verbundteile gemäß Anspruch 1,
dadurch gekennzeichnet,
daß das Polyamid aus der Reihe PA 1012, PA 11, PA 12 und PA 1212 ausgewählt ist.
3. Verbundteile gemäß Anspruch 2,
dadurch gekennzeichnet,
daß das Polyamid ein PA 12 mit einer relativen Viskosität von 1,4 bis 2,0, vorzugsweise 1,5 bis 1,7 ist.
4. Verbundteile gemäß den Ansprüchen 1 bis 3,
dadurch gekennzeichnet,
daß der Carboxyl- bzw. Anhydridgruppen enthaltende Kautschuk ein carboxylierter EPM-, EPDM- und/oder NBR-Kautschuk ist.
5. Verfahren zur herstellung der Verbundteile gemäß den Ansprüchen 1 bis 4,
dadurch gekennzeichnet,
daß
   I. das Metallteil mit einem Polyamid beschichtet wird;
   II. anschließbend die Vulkanisation der Kautschukmischung in engem Kontakt mit dem polyamidbeschichteten Metall erfolgt.